# FASCICULE DE BREVET EUROPEEN

(11) **EP 0 980 482 B1**
(45) Date de publication et mention de la délivrance du brevet: **23.10.2002**
(21) Numéro de dépôt: 99937971.2
(22) Date de dépôt: 03.03.1999
(51) Int. Cl.: F16H 45/02, F16F 15/123

(54) **APPAREIL D'ACCOUPLEMENT HYDROCINETIQUE, NOTAMMENT POUR VEHICULE AUTOMOBILE**
HYDRODYNAMISCHER DREHMOMENTWANDLER INSBESONDERE FÜR KRAFTFAHRZEUGE
HYDROKINETIC COUPLING APPARATUS IN PARTICULAR FOR MOTOR VEHICLE

(30) Priorité: 03.03.1998 FR 9802808
(43) Date de publication de la demande: 23.02.2000
(73) Titulaire: VALEO EMBRAYAGES, 80009 Amiens Cedex 1 (FR)
(72) Inventeur: ARHAB, Rabah, F-95350 Saint-Brice-sous-Fôret (FR); CHASSEGUET, Gustave, F-95150 Taverny (FR); SAUVAGE, Frédéric, F-94270 Le Kremlin Bicetre (FR); SATONNET, Daniel, F-75018 Paris (FR)
(74) Mandataire: Gamonal, Didier
(86) Numéro de dépôt international: FR9900483
(87) Numéro de publication internationale: WO99045294

(56) Documents cités:
- EP-A- 0 061 827
- EP-A- 0 154 088
- WO-A-93/13338
- WO-A-99/01683
- DE-A- 4 433 256
- GB-A- 2 271 411

## Description

La présente invention concerne un appareil d'accouplement hydrocinétique, notamment pour véhicule automobile, du type décrit et représenté par exemple dans le document WO-A-93/13339.

Ce document décrit et représente un appareil d'accouplement hydrocinétique, notamment pour véhicule automobile, du type comportant toutes les caractéristiques du préambule de la revendication 1:
- un carter doté d'une paroi, globalement d'orientation radiale, propre à être liée en rotation à un arbre menant ;
- une roue de turbine solidaire en rotation d'un moyeu propre à être lié en rotation à un arbre mené ;
- un embrayage de verrouillage, intervenant entre la roue de turbine et la paroi radiale, qui comporte, agencés axialement d'avant en arrière entre la roue de turbine et la paroi radiale :
- une portion annulaire périphérique d'orientation globalement axiale, solidaire en rotation de la roue de turbine, qui guide circonférentiellement et retient axialement vers l'avant des organes élastiques à action circonférentielle, et qui comporte localement des zones d'appui pour les extrémités circonférentielles des organes élastiques ;
- un piston, d'orientation globalement radiale, mobile axialement et lié en rotation au carter ;
et un disque de friction annulaire, d'orientation globalement radiale, d'une part, propre à être serré axialement de manière débrayable par le piston entre respectivement le piston et la face interne en vis-à-vis de la paroi radiale du carter et, d'autre part, qui comporte à sa périphérie extérieure des pattes d'entraînement qui s'étendent globalement axialement vers l'arrière à l'intérieur de la portion annulaire périphérique pour être reçues chacune entre les extrémités circonférentielles de deux organes élastiques consécutifs à action circonférentielle, et qui est mobile axialement par rapport à la position périphérique.

Les pattes d'entraînement, ici par l'intermédiaire du disque de friction, sont donc reliées de manière débrayable à la paroi transversale, par l'intermédiaire d'un élément annulaire.

Dans le mode de réalisation illustré dans ce document, la portion annulaire, d'une part, est conformée en un tube annulaire ou tore dans lequel des ressorts à boudin à action circonférentielle sont emprisonnés et, d'autre part, est fixée à la roue de turbine par un voile radial prolongeant d'un seul tenant vers l'intérieur la portion annulaire.

A cet effet, le voile est réalisé en deux pièces reliées entre elles par rivetage dont l'une, disposée axialement vers l'arrière, est de conformation particulièrement complexe dans la mesure où elle assure la retenue radiale vers l'intérieur des ressorts et dans la mesure où elle doit comporter des découpes pour le passage des pattes d'entraînement.

Il en résulte ainsi un nombre de pièces important, un coût élevé et des difficultés d'assemblage qui résultent notamment de la difficulté d'insérer axialement les pattes d'entraînement entre des ressorts adjacents, et de la nécessité de réaliser le voile en deux parties avec les ressorts avant de le lier en rotation à la roue de turbine.

Afin de remédier à ces inconvénients, l'invention propose un appareil d'accouplement hydrocinétique du type mentionné précédemment, caractérisé en ce que la portion annulaire périphérique est ouverte axialement vers l'arrière pour permettre l'introduction axiale, d'arrière en avant, des organes élastiques, entre les zones d'appui, et en ce que les organes élastiques sont portés par l'élément annulaire entre les pattes d'entraînement.

Dans une forme de réalisation, l'élément annulaire consiste en un disque de friction propre à être serré entre la paroi transversale et le piston.

Grâce à cette disposition l'embrayage de verrouillage comprend un nombre réduit de pièce puisque la portion annulaire périphérique est accouplée élastiquement au disque de friction. Par rapport au document WO-A-93 13339 on supprime donc une pièce, ce qui permet d'augmenter la taille des organes élastiques car le volume de logement des organes élastiques est alors plus important. Ceux-ci ne sont donc pas gênés à l'arrière par une quelconque pièce et peuvent venir axialement au plus près de la périphérie externe du piston du fait qu'ils sont portés par le disque de friction.

Du fait de cette augmentation de volume, les organes élastiques peuvent être donc plus résistants. Cette disposition se prête bien à l'implantation d'organes élastiques sous la forme de ressorts courbes précintrés de grande longueur circonférentielle.

Les organes élastiques se déplacent axialement avec les pattes d'entraînement et donc avec le disque de friction, en sorte que la fonction principale de la portion annulaire est une fonction de guidage notamment axiale des organes élastiques retenus axialement à l'avant par ladite portion mais pas à l'arrière contrairement à la disposition de l'art antérieur précité. Tout ceci est rendu possible par le fait que la portion annulaire est ouverte vers l'arrière, ce qui permet un mouvement axial des organes élastiques, qui avantageusement s'étendent radialement au-dessus du piston pour faciliter le montage de celui-ci sur la paroi radiale du carter. On peut standardiser cette portion annulaire celle ci étant utilisable avec un embrayage de verrouillage du type mono-face dans lequel les pattes d'entraînement sont portées par le piston, qui dans tous les cas porte une surface de frottement annulaire plate et d'orientation globalement radiale, qui est propre à être serrée entre le piston et une face interne en vis à vis de la paroi transversale.

La fabrication d'un sous-ensemble disque de friction - organes élastiques est de réalisation aisée. Ce sous-ensemble est manipulable et transportable.

Grâce à ce sous-ensemble le nombre de pièces à stocker est réduit ainsi que le risque d'erreurs notamment en ce qui concerne le choix des ressorts.

Ce sous-ensemble peut être réalisé en un endroit distinct de celui où se fait l'assemblage final de l'appareil d'accouplement hydrocinétique. Cet assemblage final est ainsi simplifié du fait que la portion annulaire est ouverte à l'arrière en sorte que l'introduction des organes élastiques du sous-ensemble précité dans la portion annulaire est aisée. On réduit donc en final le temps de montage tout en ayant une solution économique avec un embrayage de verrouillage comportant un amortisseur de torsion avec deux pièces de transmission de couple, à savoir la portion annulaire et le disque de friction, entre lesquels sont interposés circonférentiellement les organes élastiques. Quand l'embrayage de verrouillage est serré ou ponté, on obtient ainsi une bonne filtration des vibrations, le couple du moteur étant transmis alors du carter à la roue de turbine via l'amortisseur de torsion.

L'augmentation du volume et de la taille des organes élastiques permet un montage des ressorts constituant les organes élastiques sous forme concentrique.

Pour ce faire les ressorts sont portés par le disque de friction via des coupelles d'appui interposées entre les extrémités circonférentielles des ressorts et les pattes d'entraînement. Les coupelles sont portées par les pattes d'entraînement et, d'une part, centrent les ressorts extérieurs et, d'autre part, servent d'appui aux ressorts intérieurs logés à l'intérieur des ressorts extérieurs.

Bien entendu on peut utiliser des coupelles avec un seul ressort pour diminuer les phénomènes de matage des pattes d'entraînement.

Grâce au fait que les organes élastiques sont portés par le disque de friction, les mouvements axiaux entre les organes élastiques et les pattes d'entraînement sont réduits au maximum puisque le mouvement axial se produit entre la portion annulaire et les organes élastiques lorsque le disque de friction se déplace axialement par rapport à ladite portion. Il en résulte que le disque de friction peut être en matière synthétique, telle que de la matière plastique, renforcée par des fibres, telles que des fibres de carbone, de verre, de Kevelar ou autres.

Ce disque de friction peut être, d'une manière générale, en matériau composite et comporter des résines thermodurcissables renforcées par des fibres.

Les garnitures de friction peuvent donc venir de matière avec le disque de friction et comporter des rainures sur leur face externe en vis-à-vis respectivement du piston et de la paroi de carter. Il est donc possible de réaliser un glissement contrôlé des garnitures de friction.

Bien entendu, du fait de l'absence de mouvement axial relatif entre les organes élastiques et le disque de friction, les pattes d'entraînement d'orientation axiale peuvent être inclinées.

La portion annulaire sert de poche de guidage aux organes élastiques.

Selon d'autres caractéristiques de l'invention :
- la portion annulaire périphérique est conformée en une gorge ou rainure axiale ouverte axialement vers l'arrière pour un montage aisé des organes élastiques et pour un bon guidage axial des organes élastiques ;
- ladite gorge est délimitée radialement par une partie annulaire extérieure et une partie annulaire intérieure, d'orientation globalement axiale, qui sont reliées par une partie avant de forme concave, d'orientation globalement radiale, formant fond ;
- les zones d'appui pour les extrémités circonférentielles des organes élastiques sont formées dans lesdites parties annulaires extérieure et intérieure de la portion annulaire périphérique du voile en sorte que lesdites zones sont robustes et longues axialement ;
- les pattes d'entraînement d'orientation axiale sont reliées au bord périphérique extérieur du disque de friction par des coudes de raccordement sensiblement à angle droit et peuvent être inclinées axialement ;
- chaque patte d'entraînement comporte deux plots ou doigts opposés qui s'étendent circonférentiellement et dont chacun constitue un plot de centrage qui est reçu dans un logement complémentaire formé à l'extrémité circonférentielle d'un organe élastique adjacent pour attelage axial de l'organe élastique aux pattes d'entraînement ;
- le disque de friction comporte des pattes de retenue, axialement vers l'arrière, des organes élastiques qui s'étendent, globalement radialement vers l'extérieur à partir du bord périphérique extérieur du disque de friction, en regard des organes élastiques pour retenue axiale de ceux-ci à l'arrière ;
- les pattes de retenue sont réparties angulairement de manière régulière entre les pattes d'entraînement ;
- l'extrémité libre de chaque patte de retenue est reçue, avec jeu circonférentiel, à l'intérieur d'une encoche formée dans le bord arrière de la partie annulaire extérieure de la portion annulaire périphérique du voile, de manière à limiter le déplacement angulaire du disque de friction par rapport à la portion annulaire qui s'étend à la périphérie externe de l'appareil d'accouplement hydrocinétique. Le disque de friction porte sur chacune de ses faces des garnitures de friction ;
- chaque organe élastique est un ressort à boudin à action circonférentielle ;
- chaque plot de centrage est reçu à l'intérieur de l'extrémité d'un ressort adjacent.

On notera que le disque de friction a une fonction de retenue axiale des organes élastiques en sorte que ceux-ci travaillent dans de bonnes conditions.

Avantageusement la partie annulaire intérieure de ladite portion est inclinée, par exemple de forme tronconique, pour faciliter le montage et le dégagement.

En variante, l'élément annulaire est formé par le piston lui-même, les pattes d'entraînement étant issues directement du piston ou rapportées de manière individuelle sur celui-ci. Toutes les dispositions évoquées ci-dessus sont transposables à une réalisation avec un piston.

D'autres caractéristiques et avantages de l'invention apparaîtront à la lecture de la description détaillée qui va suivre pour la compréhension de laquelle on se reportera aux dessins annexés dans lesquels :
- la figure 1 est une demi-vue en section axiale d'un premier mode de réalisation d'un appareil d'accouplement conforme aux enseignements de l'invention ;
- la figure 2 est une vue en perspective qui illustre le voile et le disque de friction de l'appareil de la figure 1 ;
- les figures 3 et 4 sont des vues similaires à celles des figures 1 et 2 qui illustrent une variante de réalisation de l'appareil conforme aux enseignements de l'invention ;
- les figures 5 et 6 sont des vues similaires à celles des figures 1 et 2 qui illustrent la possibilité d'utiliser le disque de friction illustré aux figures 1 à 4 en association avec un voile modifié dans un appareil d'accouplement ne comportant pas de ressorts à action circonférentielle;
- la figure 7 est une vue partielle de dessus montrant une patte d'entraînement équipée de coupelles d'appui pour montage de ressorts concentriques ;
- la figure 8 est une vue analogue à la figure 3 pour un autre exemple de réalisation ;
- la figure 9 est une demi-vue analogue à la figure 1 pour encore un autre exemple de réalisation ;
- la figure 10 est une vue partielle analogue à la figure 9 mais coupée en un autre endroit pour montrer un autre détail ;
- les figures 11à 16 sont des vues analogues à la figure 1 pour encore d'autres exemples de réalisation ;
- la figure 17 est une vue de la portion de guidage selon la flèche 17 de la figure 16 ;
- les figures 18et 19 sont des vues analogues aux figures 16,17 pour encore un autre exemple de réalisation ;
- la figure 20 est une variante de la figure 18

Dans la description qui va suivre, des composants identiques similaires ou analogues seront désignés par les mêmes chiffres de référence.

Pour faciliter la lecture de la description et des revendications, les termes avant, arrière, supérieur, inférieur, vertical, horizontal, etc., seront utilisés à titre non limitatif et en référence aux figures.

On a représenté sur les figures un appareil d'accouplement hydrocinétique 10, notamment pour une transmission de véhicule automobile, du type comportant un carter 12 étanche rempli d'huile avec deux coquilles reliées entre elles de manière étanche à leur périphérie externe. L'une des coquilles, illustrée sur les figures, comporte une paroi dite paroi radiale 14 qui s'étend globalement transversalement dans un plan perpendiculaire à l'axe général X-X de rotation et symétrie axiale du dispositif d'accouplement 10.

La paroi radiale 14 est réalisée venue de matière en une seule pièce en tôle d'épaisseur constante et emboutie et elle se prolonge, au-delà de son bord radial extérieur, par une portion annulaire d'orientation axiale 16 en forme de jupe cylindrique dont le bord d'extrémité libre avant 18 est conçu pour permettre la liaison de cette coquille 12 avec l'autre coquille du carter (non représentée sur les figures) qui est conformée pour former la roue d'impulseur.

A sa partie centrale, la paroi radiale 14 comporte un manchon central 20. La liaison en rotation de la paroi radiale 14 à un arbre menant (non représenté sur la figure), ici le vilebrequin du véhicule, est réalisée ici à l'aide d'un flasque souple (non représenté) se fixant sur des pièces de fixation filetées 300 solidaires de la paroi 14.

Le manchon s'étend axialement vers l'arrière à partir d'une portion centrale 22 de la paroi radiale 14 qui est décalée axialement vers l'avant par rapport au plan radial médian dans lequel s'étend la paroi 14.

Le bord d'extrémité libre annulaire arrière 24 du manchon 20 est soudé à la partie arrière de plus petit diamètre 26 d'une bague étagée de poussée 28 qui se prolonge axialement vers l'arrière, à l'extérieur du carter 12, par un tronçon cylindrique d'extrémité arrière 30 formant centreur. La bague 28 est donc solidaire de la paroi 14.

La partie avant 32 de plus grand diamètre de la bague de poussée 28 s'étend axialement à l'intérieur du carter 12 et radialement en partie en vis-à-vis de la face interne avant 34 de la portion centrale 22 de la paroi 14.

La partie avant 32 de la bague de poussée 28 délimite extérieurement une surface annulaire cylindrique 36 d'orientation axiale qui constitue une portée périphérique externe de guidage en coulissement axial, ici étanche, d'une virole radiale intérieure 38 appartenant à un piston 40.

La surface de portée 36 comporte une gorge radiale 42 qui est prévue pour recevoir un joint d'étanchéité (non représenté).

A partir de sa face arrière 44, d'orientation radiale, la partie de grand diamètre 32 de la bague de poussée 28 comporte une série d'ergots 46, d'orientation axiale, qui sont répartis angulairement de manière régulière et qui déterminent, avec la face 34 de la partie centrale 22 de la paroi radiale 14, autant de passages d'orientation radiale qui mettent en communication une chambre intérieure 48, délimitée axialement par la paroi 14 et le piston 40, avec un ou plusieurs canaux 50 qui traversent la partie cylindrique avant de plus petit diamètre 26 de la bague de poussée 28, pour faire communiquer la chambre 48 avec l'intérieur de la bague de poussée 28 qui est fermée axialement vers l'avant par le tronçon cylindrique 30 et qui débouche axialement vers l'arrière à l'intérieur du corps 52 en forme de douille cylindrique creuse appartenant à un moyeu 54 qui est cannelé intérieurement 56 pour permettre sa liaison en rotation avec un arbre mené (non représenté sur les figures).

La bague de poussée 28 présente donc un alésage central borgne pour alimentation en fluide de la chambre 48 via les canaux 50, les ergots 46 et l'arbre mené doté de manière connue d'un canal d'alimentation.

Le moyeu 54 est coaxial aux autres éléments de l'appareil 10, et notamment à la bague de poussée 28, et il se prolonge radialement vers l'extérieur, à partir de la portion d'extrémité arrière 58 de sa douille 52, par un flasque 60 d'orientation radiale.

Une pièce 62 est rapportée sur le flasque 60, ou en variante sur la bague de poussée 28, pour constituer une pièce d'appui axial, d'une part, pour la face radiale avant 64 de la partie avant 32 de la bague de poussée 28 et, d'autre part, pour la face annulaire d'extrémité avant 66 de la virole 38 de guidage en coulissement du piston 40.

La pièce 62 évite donc des contacts métal sur métal et présente un coefficient de frottement faible.

A cet effet, la pièce 62 est constituée pour l'essentiel par une plaque en forme d'anneau plat, formant plaque de butée.

La face annulaire plane arrière 74 de la plaque 62 constitue une face d'appui pour la virole 38 et pour la face radiale avant 64 de la bague 28 qui comporte un lamage pour son centrage sur le bord cylindrique intérieur de la plaque 62.

La pièce rapportée 62 assure donc aussi un centrage de la bague 28 par rapport au moyeu 54.

La plaque 62 forme aussi entretoise entre le flasque 60 et le piston 40, c'est-à-dire que, en position dépontée du piston 40, il existe un jeu axial entre la face annulaire avant 80 en vis-à-vis de la partie radiale intérieure 82 du piston 40 et la face annulaire en vis-à-vis 84 du flasque 60.

La partie centrale principale du flasque 60 se prolonge radialement vers l'extérieur par un bord radial extérieure 86, qui comporte un lamage annulaire 88 formé dans la face radiale avant 90 du flasque 60. Le flasque 60 est donc moins épais au niveau du bord 86.

Le fond radial du lamage 88 constitue une surface d'appui axial vers l'arrière pour un bord radial intérieur annulaire plat et d'orientation radiale 92 appartenant à un voile 94.

Ce bord radial intérieur 92 est fixé au bord 86 du flasque 60 par une série de rivets 95 dont chacun traverse un trou 96 formé dans le bord 86 du flasque 60 et un trou correspondant 98 formé dans le bord radial intérieur 92 du voile 94. Chaque rivet 95 traverse aussi un trou 100 formé dans un anneau interne 102 appartenant à une roue de turbine 104.

L'anneau 102 s'étend radialement vers l'intérieur dans un plan radial et est adjacent à la face annulaire avant 106 du bord 92 du voile 94 de manière à être aussi reçue à l'intérieur du lamage 88.

A partir de son bord radial intérieur 92, le flasque 94 comporte, radialement vers l'extérieur, un coude 108 puis une portion centrale 110 en forme d'anneau plat de manière à épouser sensiblement le contour en vis-à-vis de la roue de turbine 104, puis une portion 112 de forme générale tronconique, et une portion annulaire périphérique extérieure 114 globalement en forme de demi tore. Cette portion 114 s'étend en majeure partie radialement au-dessus du piston 40 et est implantée à la périphérie externe de la roue de turbine 104 à aubes.

La portion annulaire 114 de forme concave est conformée globalement en une gorge d'orientation axiale qui est ouverte axialement vers l'arrière en direction de la paroi radiale 14 et est très proche du piston 40 en s'étendant à la périphérie externe de l'appareil 10 et de la roue de turbine 104.

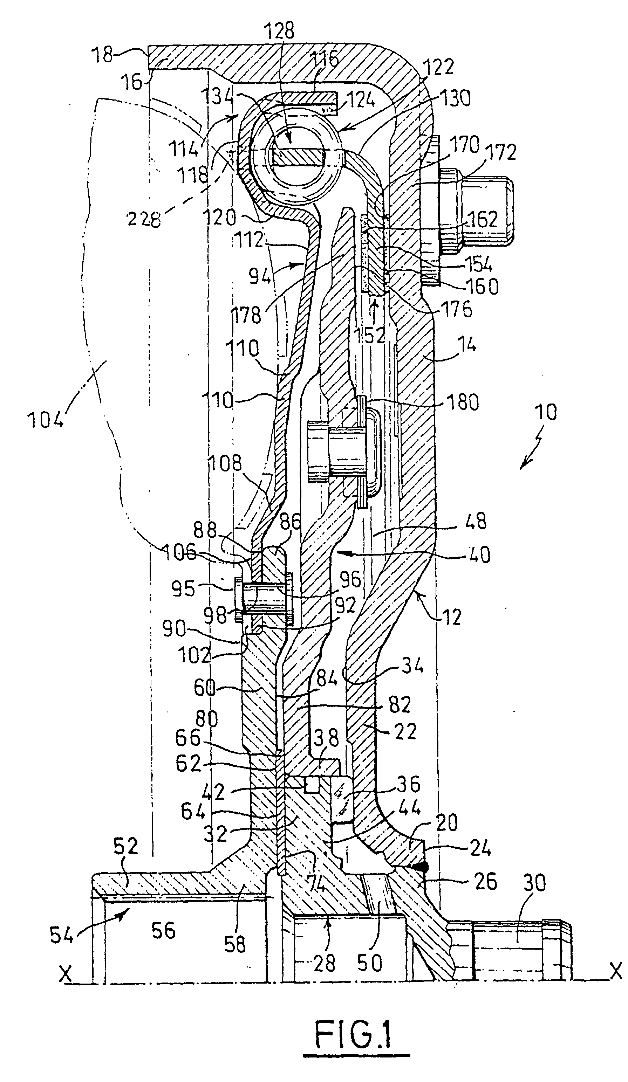

Comme on peut le voir sur la figure 1, sur laquelle la portion annulaire 114 est illustrée en section axiale, ladite portion comporte une partie annulaire extérieure 116 d'orientation axiale qui s'étend axialement vers l'arrière à partir d'une partie avant 118 de forme concave, ici de section globalement semi-circulaire, qui s'étend dans un plan radial et qui est reliée au bord périphérique extérieur de la portion tronconique 112 par une partie annulaire intérieure 120 d'orientation globalement axiale.

Plus précisément la partie avant 118 est de forme plate au niveau de sa zone de raccordement à la partie intérieure 120 pour venir très près de la roue de turbine 104, ici de manière tangente, et occuper tout l'espace disponible à la périphérie externe de la roue de turbine 104.

En section, la portion annulaire périphérique 114, présente un profil en C, et elle reçoit des organes élastiques à action circonférentielle, ici sous la forme d'une série de ressorts à boudin 122 à action circonférentielle, qui interviennent sur une même circonférence et dont le diamètre extérieur est légèrement inférieur à la hauteur verticale de la gorge 114 entre ses parties 116,120.

Selon un principe connu, les ressorts 122 sont ainsi guidés circonférentiellement.

On notera que la partie externe 116 est plus longue axialement que la partie interne 120 légèrement inclinée en direction de l'axe X-X de symétrie pour l'introduction des ressorts 122 dans la gorge 114. Cette partie interne 120 facilite le dégagement des ressorts 122.

Les ressorts 122 interviennent entre le voile 94 et un disque de friction 152. A cet effet, la portion annulaire 114 comporte des zones d'appui qui sont des surfaces d'appui circonférentiel constituées par les extrémités circonférentielles d'emboutis 124 et 126 en vis-à-vis qui sont formés radialement vers l'intérieur, respectivement vers l'extérieur, dans les parties annulaires extérieure 116 et intérieure 120.

Le disque 152 est une pièce en forme générale d'anneau plat. Ce disque 152 est relié de manière débrayable à la paroi 14.

Il est constitué par un corps ou partie centrale 154 en forme d'anneau plat dont les faces planes annulaires et opposées, arrière et avant, portent chacune respectivement une garniture annulaire de frottement arrière 160 et avant 162.

La garniture arrière de frottement 160 du disque de friction 152 est prévue pour coopérer avec une piste annulaire de frottement 170 qui est formée en vis-à-vis dans la face intérieure de la paroi radiale 14.

Plus précisément, la piste de frottement 170 est usinée dans la face intérieure d'une portion médiane 172 de la paroi radiale 14 qui est réalisée, à la faveur d'un embouti axial annulaire, de manière à s'étendre dans un plan vertical décalé axialement vers l'avant, c'est-à-dire vers la gauche en considérant la figure 1, par rapport au plan vertical médian dans lequel s'étend la paroi radiale 14.

La garniture de frottement avant 162 est prévue pour coopérer avec une piste annulaire de frottement 176, orientée axialement vers l'arrière, qui est formée sur la face correspondante de la partie périphérique annulaire extérieure 178 du piston 40.

En variante le disque 152 est dépourvu de garnitures 160,162 et frotte directement sur les pistes 170,176.

Comme on peut le voir sur les figures, cette partie périphérique radiale extérieure 178 du piston 40 est décalée axialement vers l'arrière par rapport au plan général radial dans lequel s'étend le piston 40.

Le piston 40 est lié en rotation à la paroi radiale 14 par une série de languettes élastiques 180 agencées sensiblement selon une circonférence et qui interviennent tangentiellement entre le couvercle12 et le piston 14 tout en autorisant un déplacement axial relatif de ces deux éléments comme décrit dans le document FR97 15600 du 8 décembre 1997.

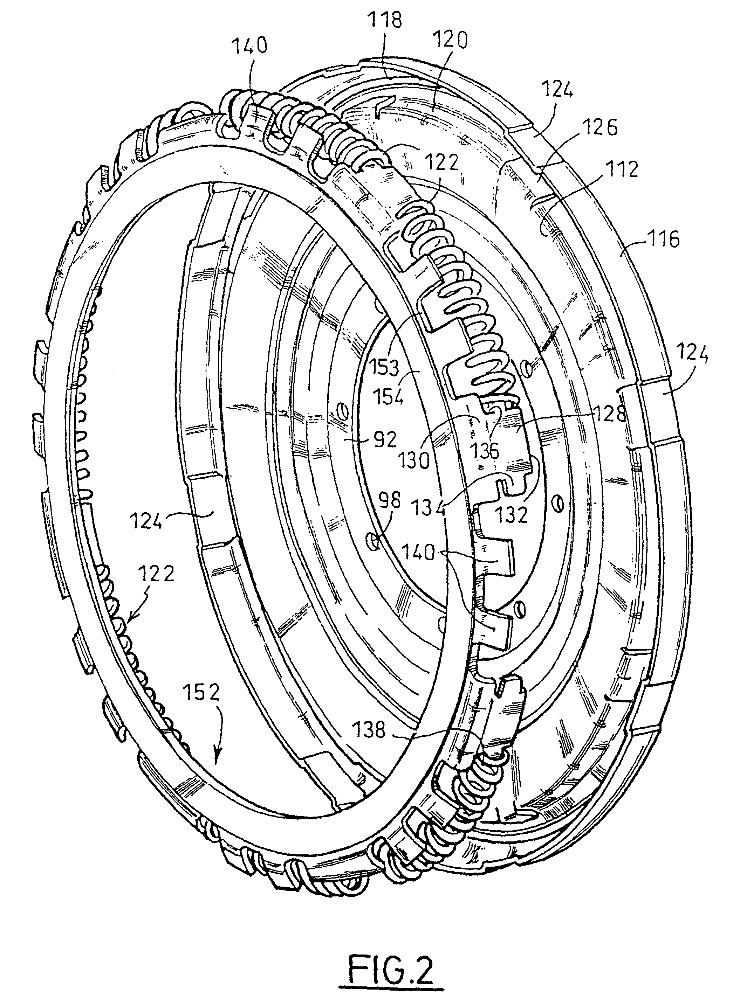

Conformément aux enseignements de l'invention, et comme on peut le voir notamment aux figures 1 et 2, le disque de friction 152 comporte à sa périphérie externe des pattes d'entraînement 128 qui s'étendent axialement vers l'avant en direction de la portion annulaire 114, sensiblement à mi-hauteur entre les parties annulaires 116 et 120.

Les pattes d'entraînement 128 sont réparties angulairement de manière régulière et chacune d'elles est reliée au bord périphérique extérieur 153 du disque de friction 152 par un coude de raccordement 130 à angle droit.

Chaque patte d'entraînement 128 comporte, au voisinage de son extrémité axiale avant 132, deux doigts ou plots opposés 134. Chaque plot 134 est un plot de centrage et de maintien d'un ressort 122 qui s'étend circonférentiellement à partir d'un bord latéral 136 et qui pénètre à l'intérieur de l'extrémité ouverte 138 du ressort adjacent. Les plots 134 ont ici une forme trapézoïdale. L'espacement circonférentiel des pattes d'entraînement 128 et la longueur de chaque ressort 122 sont tels que chaque ressort est monté entre deux plots ou doigts 134 en vis-à-vis entre lesquels il est maintenu pour former un tout structurel avec le disque de friction 152 avant le montage de ce dernier, préalablement muni de ses ressorts 122, dans le dispositif 10. Par rapport au disque de friction 152, les ressorts sont retenus axialement vers l'arrière par des pattes de retenue 140 qui s'étendent radialement vers l'extérieur à partir du bord périphérique 153 du disque de friction 152 en étant légèrement repliées axialement vers l'avant pour venir en contact avec la partie supérieure des ressorts 122 radialement au-dessus des pattes 128 et ici radialement en dessous des emboutis 124.

Dans l'exemple illustré aux figures 1 et 2, il y a deux pattes de retenue 140 entre deux pattes d'entraînement consécutives 128, et les pattes 140 sont réparties angulairement de manière régulière.

La longueur circonférentielle de chaque ressort 122, en position montée entre deux plots 134, est légèrement inférieure à la distance séparant les surfaces d'appui en vis-à-vis et consécutives 124, 126 de manière que le sous-ensemble constitué par le disque de friction 152 qui porte les ressorts 122 puisse être introduit axialement, d'arrière en avant dans la portion annulaire 114 en forme de gorge.

Après le montage, il demeure une possibilité de déplacement axial relatif du disque 152 par rapport au voile 94 et à la portion 114.

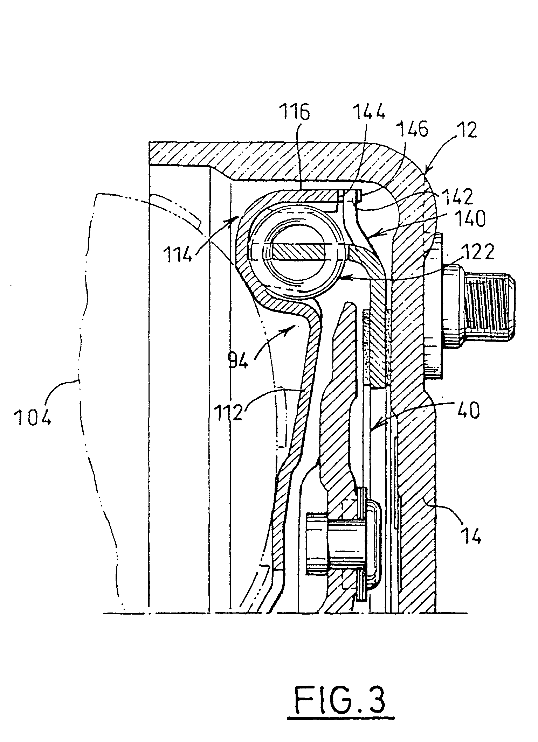

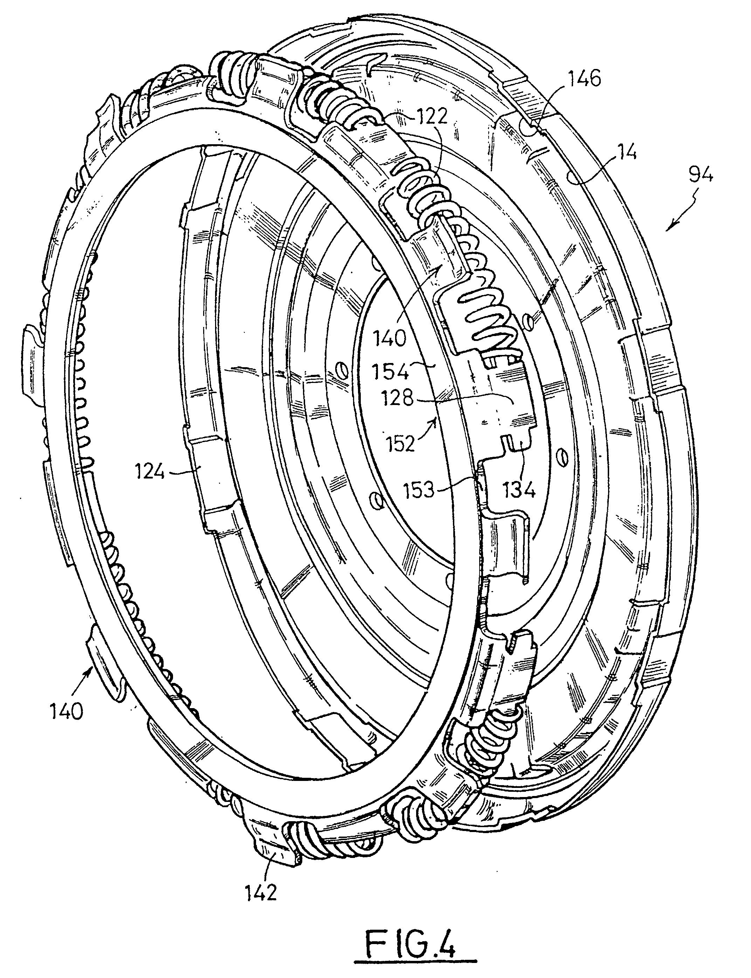

Dans la variante de réalisation illustrée aux figures 3 et 4, et afin de limiter par des butées mécaniques le déplacement angulaire relatif du disque 152 par rapport au voile 94, les pattes 140 de retenue des ressorts 122 sont coudées en S de manière à s'étendre globalement de manière inclinée vers l'avant en direction de la portion annulaire 114.

Ainsi, le bord d'extrémité libre 142, radiale extérieure, d'une patte 140 est reçu avec jeu circonférentiel dans une encoche 144 formée dans le bord annulaire 146 d'extrémité axiale arrière de la partie annulaire extérieure 116.

Dans cette variante de réalisation, il n'y a qu'une seule patte de retenue, de plus grande largeur circonférentielle, qui est centrée entre deux pattes de retenue consécutives 128.

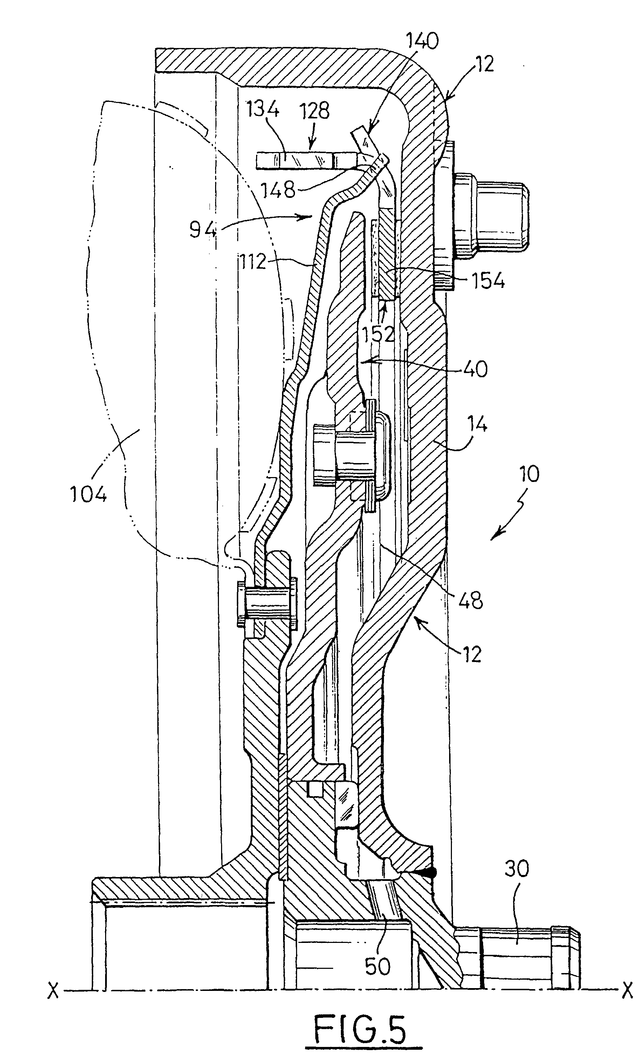

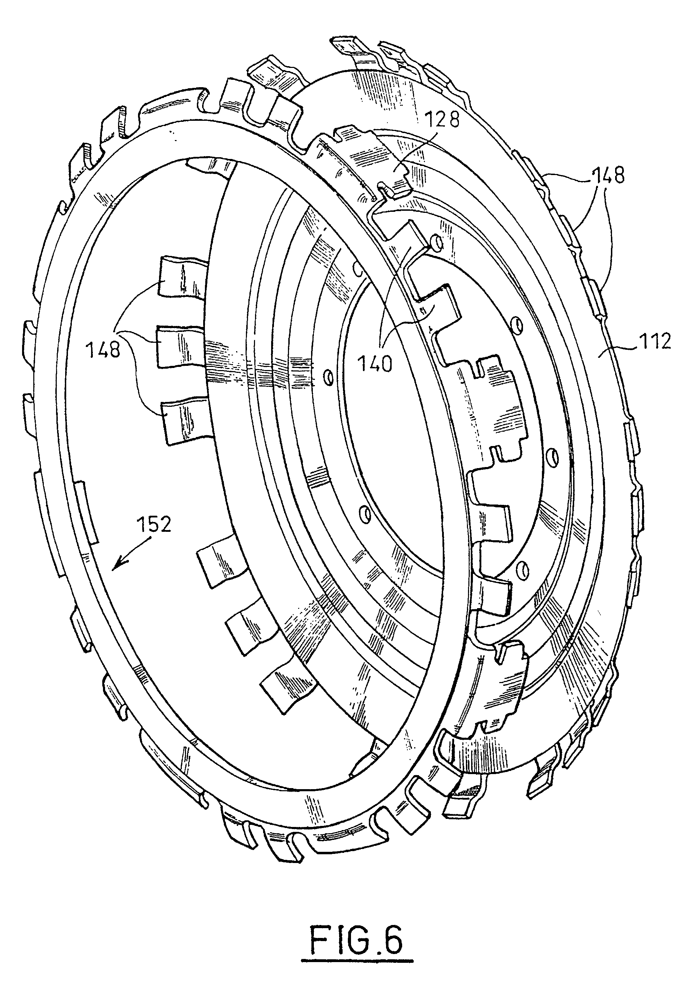

Dans le mode réalisation illustré aux figures 5 et 6, l'appareil 10 ne comporte pas de ressorts d'amortissement à action circonférentielle intervenant entre le disque de friction 152 et le voile.

Toutefois, afin de permettre une standardisation de composants, il est fait appel à un disque de friction 152 en tous points identique à celui décrit en référence aux figures 1 et 2 qui est entraîné en rotation par un voile dont la portion annulaire périphérique est modifiée pour, au-delà du bord périphérique 113 de la partie tronconique 112, se prolonger par des pattes 148 qui s'étendent globalement radialement vers l'extérieur en étant inclinées axialement vers l'arrière. Les pattes de réaction 148 sont réparties angulairement de manière régulière par séries de trois, deux pattes 140 étant reçues pratiquement sans jeu circonférentiel entre trois pattes de réaction 148 consécutives. De plus, il est possible d'introduire axialement les pattes de retenue 140 entre les pattes de réaction 148.

Pour mémoire, on rappellera que la roue de turbine 104 est entraînée par une roue d'impulseur (non représentée), grâce à la circulation de fluide contenu dans le carter entre les aubes desdites roues et que, après démarrage du véhicule, l'embrayage de verrouillage permet, pour éviter les phénomènes de glissement entre les roues de turbine et d'impulseur, une solidarisation de l'arbre mené relié à la roue de turbine, avec l'arbre menant relié à la paroi radiale 14 du carter.

L'embrayage de verrouillage intervient ainsi entre la roue de turbine et la paroi radiale. Il coulisse par son piston 40 sur la bague de poussée 28 solidaire de la paroi radiale 14. La commande du serrage ou pontage et du desserrage de l'embrayage est assurée, selon une technique connue, en faisant varier la pression dans la chambre 48 délimitée axialement par le piston 40 et la paroi radiale 14 et radialement vers l'intérieur par la bague de poussée 28 et vers l'extérieur par le disque de friction 152.

La paroi 14 forme l'élément d'entrée proprement dit de l'appareil d'accouplement hydrocinétique 10 car elle est reliée à l'arbre menant, tandis que la roue de turbine 104, par l'intermédiaire du moyeu 54 solidaire de celle-ci, forme l'élément de sortie dudit appareil 10.

Bien entendu la présente invention n'est pas limitée à l'exemple de réalisation décrit. En particulier le piston 40 peut être lié en rotation à la paroi radiale 14 à l'aide d'un anneau solidaire du piston et présentant des rainures axiales, formant mortaises, dans lesquelles s'engagent des pattes radiales, formant tenons, appartenant à une plaque solidaire de la paroi 14 et formant une piste de frottement pour la garniture arrière de frottement. En variante la plaque présente des pattes axiales engagées chacune entre deux emboutis formés dans le piston.

Les garnitures de frottement 160,162 peuvent être solidaires, par exemple par collage respectivement de la partie 178 du piston 40 et de la partie médiane 172 de la paroi radiale 114. Dans tous les cas le disque 152 est un disque de friction destiné à être serré de manière débrayable entre la paroi 14, dotée éventuellement d'un revêtement, et le piston 40, doté éventuellement d'un revêtement. Bien entendu les garnitures de frottement 160,162 peuvent être dotées de rainures comme décrit dans le document WO-A-93 13339 précité. Ces rainures permettent de réaliser un glissement contrôlé des garnitures 160,162.

Dans tous les cas le disque de friction 152 est intercalé entre les deux garnitures de friction 160,162 éventuellement monobloc avec le disque de friction 152.

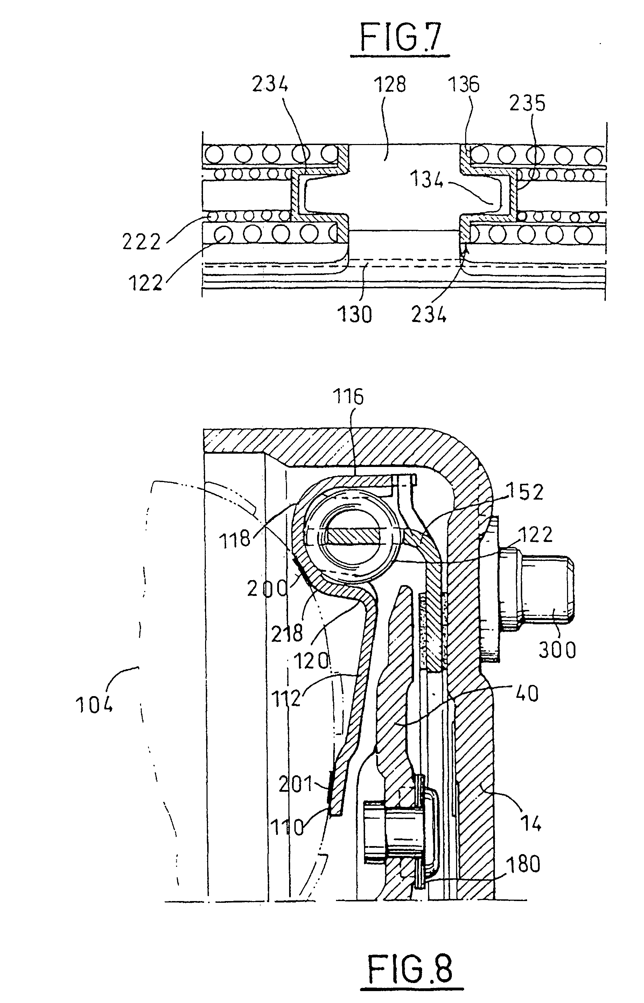

Bien entendu les doigts ou plots 134 peuvent servir au montage de coupelles d'appui 234 interposées entre les extrémités circonférentielles des ressorts 122 et les pattes 128, comme montré à la figure 7.

Les coupelles 234 protègent les pattes 128.

Ici les coupelles 234 présentent centralement une protubérance cylindrique 235, ici en forme de pions creux, pénétrant à l'intérieur d'un ressort 122 pour servir d'appui par sa face d'extrémité 236 à un ressort à boudin 222 entouré par le ressort 122.

Ainsi les ressorts 122,222 sont montés de manière concentrique et la coupelle 234 prend appui contre le bord latéral 136 de la patte 128 en étant maintenue par le plot central 134 pénétrant dans la protubérance 235, d'orientation circonférentielle, de la coupelle 234 pour maintien de celle-ci.

La coupelle 234 est donc en forme de chapeau et sert de centreur au ressort 122 et d'appui au ressort interne 222.

On notera que le montage concentrique des ressorts 122,222 est rendu possible par le fait que, grâce à l'invention, un volume important est libéré à la périphérie externe de l'appareil d'accouplement hydrocinétique radialement au-dessus de la périphérie externe du piston.

Grâce à l'invention, lorsque l'embrayage de verrouillage est serré, le couple moteur est transmis de la paroi 14 à la roue de turbine via un amortisseur de torsion comportant deux pièces de transmission de couple, à savoir le disque de friction et le voile 94 doté d'un seul tenant de la portion annulaire périphérique de guidage des organes élastiques 122,222 intervenant entre ces deux pièces.

La partie intérieure 120 de la portion 114 peut venir au plus près du piston 40, dont la périphérie externe est chanfreinée pour ne pas interférer avec la zone de raccordement de la partie 120 avec la portion tronconique 122 du voile.

Ici les organes élastiques 122, portés par le disque de friction 152, s'étendent au-dessus de la périphérie externe du piston 40.

A la figure 3 la partie supérieure 116 s'étend en saillie axiale vers l'arrière par rapport aux ressorts 122.

A la figure 1 les ressorts 122 s'étendent légèrement en saillie axiale vers l'arrière par rapport à la partie supérieure 116.

Les pattes 128 attaquent de manière symétrique les ressorts, c'est-à-dire diamétralement.

Bien entendu les pattes 128 peuvent être axialement inclinées ainsi que la partie supérieure 116.

La portion annulaire 114, comme visible dans les figures 8 et 11 à 13, peut être fixée directement sur la roue de turbine 104, par exemple par agrafage, bouterollage,par soudage par friction ou à l'aide d'un cordon de soudure. Un tel codon est visible en 200 à la figure 8. Dans ce cas le soudage est réalisé entre la roue de turbine 104 et la partie aplatie 218 de raccordement de la partie avant 118, de forme courbe. Bien entendu on peut conserver la partie externe du voile 94 et fixer la portion centrale 110 directement sur la roue de turbine 104 par agrafage ou soudage comme visible en 201 à la figure 8.

Ce deuxième point de fixation 201 renforce la fixation directe de la portion 114.

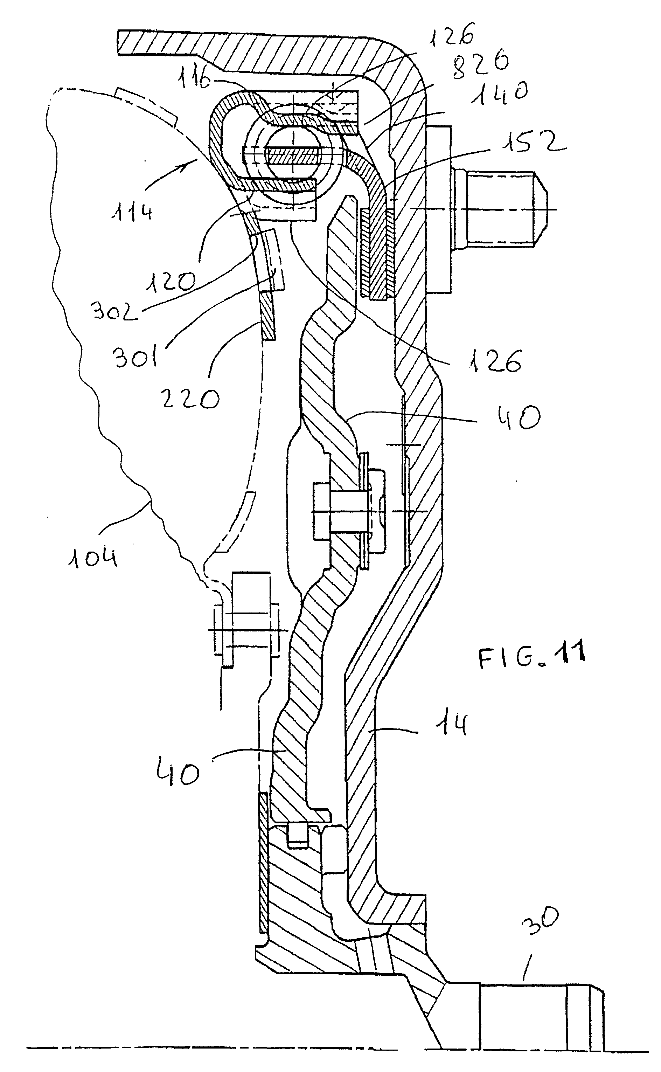

Dans la réalisation de la figure 11 la partie intérieure 120 de la portion 114 est interrompue par des pattes de fixation 220 dirigées radialement vers l'intérieur et épousant la forme de la roue de turbine . On voit en 301 une patte d'agrafage d'une aube de la roue de turbine au tore extérieur de celle-ci. La patte 301 traverse une ouverture 302 réalisée dans la pattes de fixation 220 pour être ensuite rabattue au contact de cette patte 220 en sorte que chaque patte de fixation 220 est agrafée sur la roue de turbine 104.Les pattes de fixation 220 sont avantageusement découpées dans la zone de la partie interne 120 entre deux appuis 126 en utilisant la partie centrale de matière qui est perdue lors de la réalisation de la portion 114.

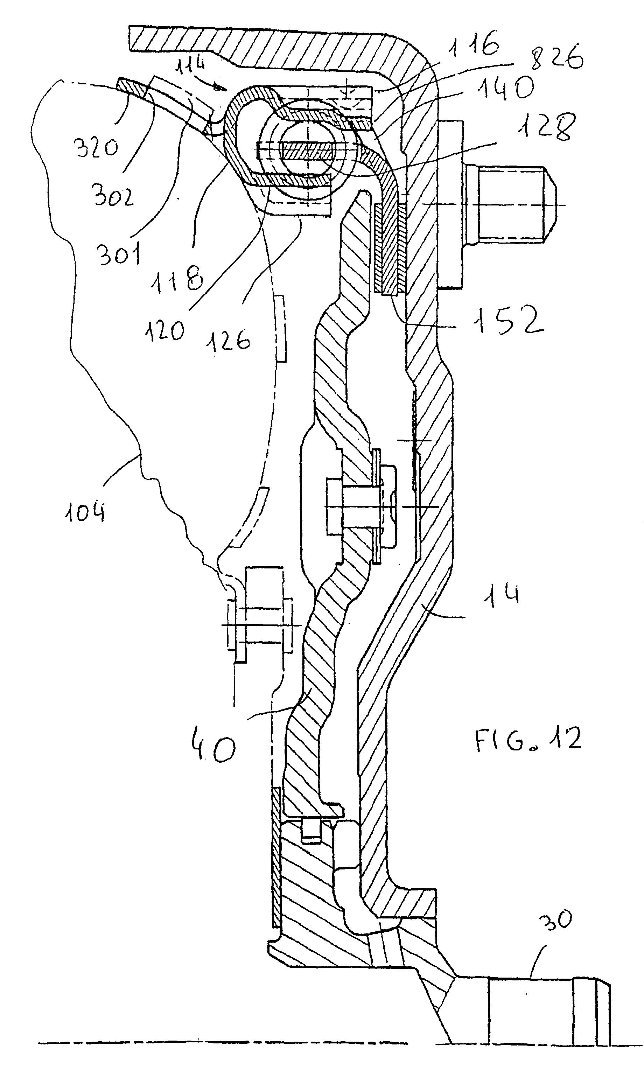

Dans la figure 12 les pattes de fixation 320 sont découpées dans la partie interne 120 entre deux appuis 126 et dans le fond 118 constituant la partie avant de la portion 114. Ces pattes 320 sont dirigées radialement vers l'extérieur pour être agrafées au contact de la roue 104 comme à la figure 11.

Bien entendu on peut inverser les structures en sorte que les pattes d'agrafages peuvent êtres issues de la portion annulaire pour traverser chacune une ouverture du tore extérieur de la roue de turbine pour être rabattues intérieurement au contact du dit tore.

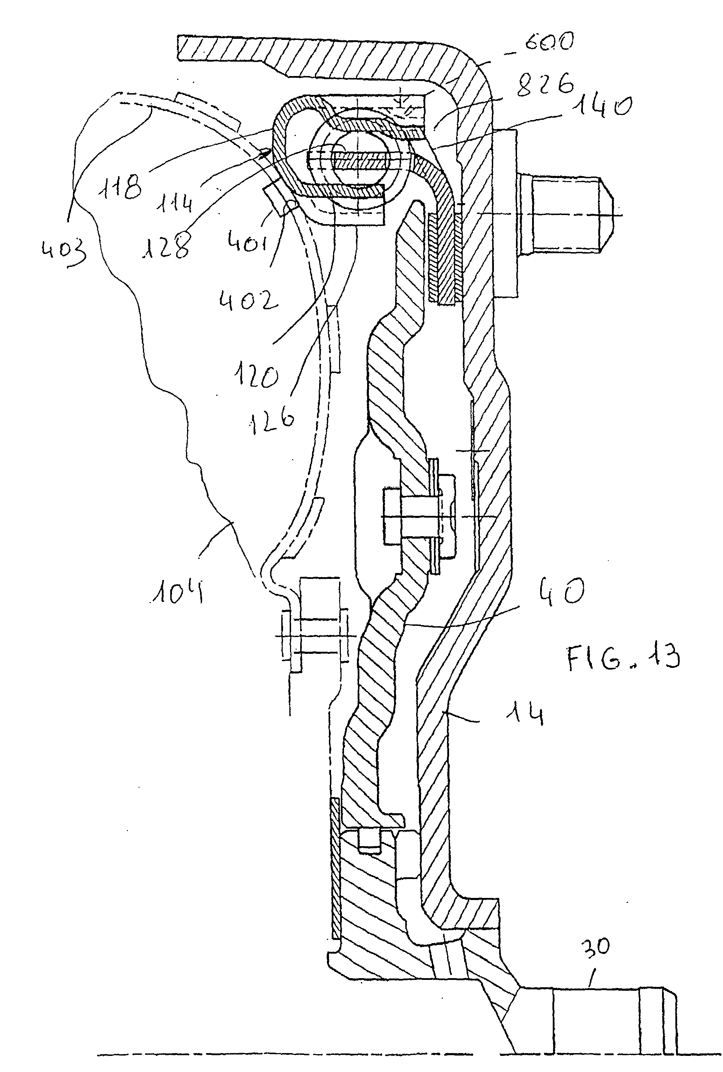

Ainsi dans la figure 13 les pattes d'agrafages 401 sont issues de la partie avant 118 entre deux appuis 126 pour traverser une ouverture 402 de la roue 104 et être rabattues au contact du tore extérieur 403 de la roue 104.Bien entendu les pattes d'agrafage peuvent être issues des aubes de la roue 104 pour agrafer la partie 118 à l'inverse de la figure 13.

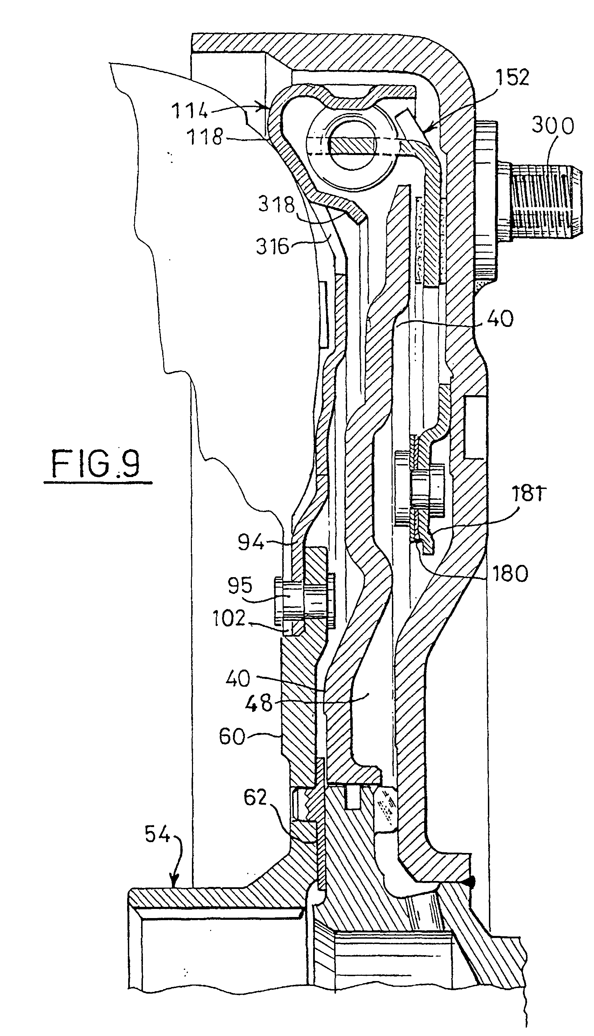

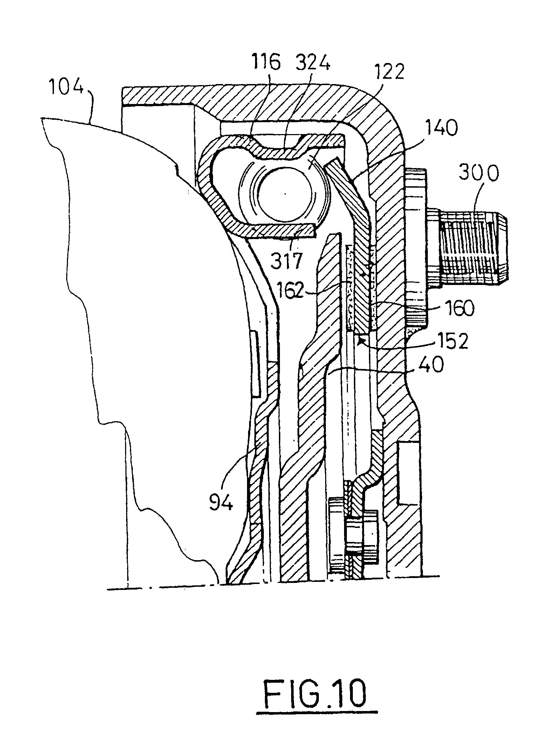

La présence d'un voile 94 n'est donc pas indispensable, la portion annulaire 114 pouvant être fixée directement sur la roue de turbine 104. Toutes les combinaisons sont possibles. De même la partie intérieure de la portion 114 peut être inclinée comme visible en 316 dans les figures 9 et 10.

Dans ce cas on découpe des pattes d'appui axiales 317 et des pattes de montage 318 axialement inclinées vers l'axe X-X dans la partie intérieure 316 et ce de manière circonférentiellement alternée.

Les pattes 318, par leur inclinaison, facilitent le montage des ressorts 122. La partie avant 118 de la portion 114 concave comporte ici une partie extérieure 116 d'orientation axiale qui s'étend vers l'arrière à partir d'une partie avant 118 de forme concave annulaire s'étendant en arc de cercle sur plus de 180° et raccordée à une partie intérieure 316 inclinée vers l'axe X-X et se raccordant au voile 94.

De même les zones d'appui 324, formées dans la partie extérieure 116, peuvent être réalisées par découpage et consister en des bandes de matière.

A la figure 9 on voit que les languettes 180 fixées au piston sont fixées à leur autre extrémité sur une pièce ou plaque de support 181 solidaire de la paroi 14.

Ici les languettes 180 sont fixées au piston 40 par des simples rivets comme décrit dans le document FR97 15600 déposé le 8 décembre 1997, des bouchons (non visibles) étant prévus dans le piston 40 pour fixation de la pièce au support par rivetage.

Ainsi le piston présente des bouchons en vis-à-vis des fixations à la paroi 14 de la plaque de support 181 des languettes, qui sont ainsi fixées par avance au piston 40 que l'on peut monter à la figure 1 sur la bague malgré la présence des ressorts 122 et du disque 152 puisque les ressorts 122 s'étendent radialement au-dessus du voile 122.

On peut donc d'abord fixer la bague 28, puis positionner le disque de friction 152, puis enfiler le piston 40, équipé des languettes 180, sur la bague 28, fixer les languettes à la paroi 14, mettre les bouchons et ensuite engager la portion 114 sur les ressorts 122.

Dans les figures 9 et 10 les ressorts 122 s'étendent radialement en dessous du piston 40.

On forme donc un sous-ensemble disque 152 - ressorts 122 - piston 40 sur lequel sont fixées les languettes 118, puis on fixe en final le sous-ensemble sur la paroi 14.

Dans toutes les figures 1à 10 les parties intérieures 120,316 sont de forme tronconique.

Ainsi qu'il ressort à l'évidence de la description dans les figures 1à 8 les parties externes 116 et internes 120 sont robustes car les emboutis 124 et 126 sont obtenus ici par déformation sans interruption de matière. Dans les figures 10à 13 les parties externes sont également continues et robustes sans interruption de matière.

En variante, les emboutis 124 sont remplacés par des surépaisseurs issus de la partie externe 116.

Par exemple, la partie externe 116 présente au niveau de son extrémité libre des pattes d'orientation axiale dirigées vers la paroi 14, que l'on replient après pour les amener au contact de la périphérie interne de la partie externe 116.

Les emboutis 124, 126 peuvent être remplacés par des pièces soudées ou rapportées de quelconque manière , par exemple par encliquetage, respectivement sur la périphérie interne de la partie externe 116 et sur la périphérie externe de la partie interne 120.

En variante, les emboutis 124, 126 peuvent appartenir à une même pièce rapportée par soudage à l'intérieur de la portion 114 comme décrit dans le document FRA-2 709 164.

Cette pièce peut être rapporté par encliquetage sur la portion 114.

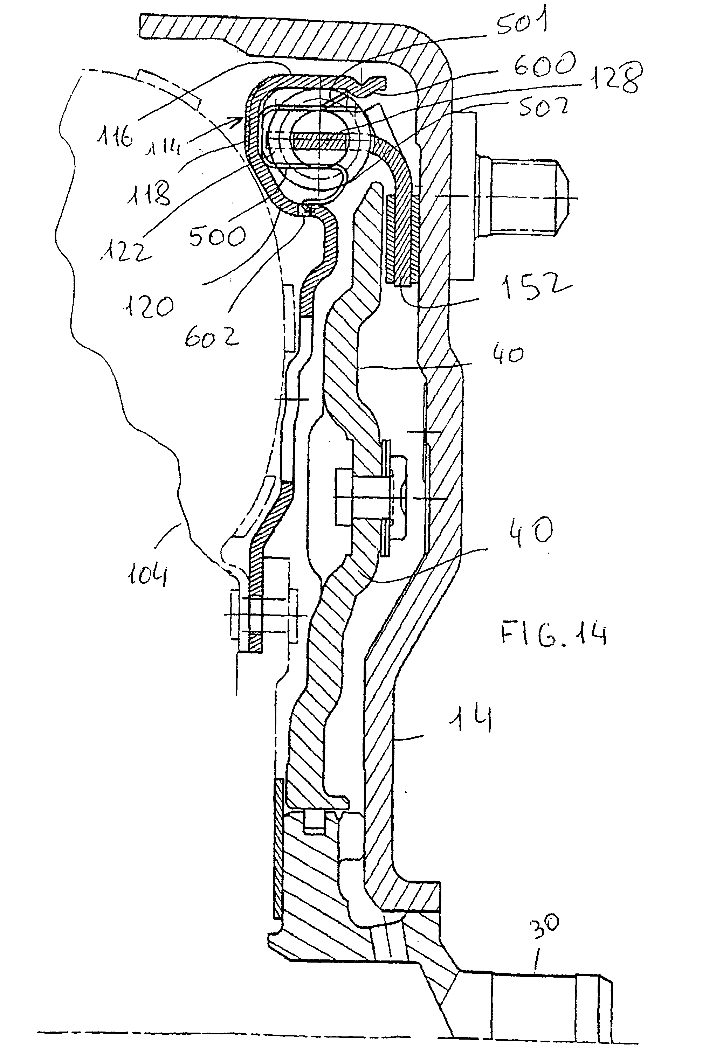

Ainsi dans la figure 14 on voit en 500 une telle pièce globalement en forme de U avec un fond au contact de la partie avant 118 et deux branche parallèles aux pattes d'entraînement 128 et s'étendant de part et d'autre d'une patte associée 128.Les branches servent d'appui aux extrémités circonférentielles des ressorts 122. La partie externe 116 présente à son extrémité libre des bourrelets 600 en forme de secteurs annulaires dirigés radialement vers l'intérieur et donc vers le piston 40 ce qui permet de créer une butée de sécurité limitant le déplacement des ressorts 122 ,afin d'éviter que ceux-ci ne s'échappent de la portion 114. Cette disposition est applicable à tous les modes de réalisation, la butée 600 autorisant un mouvement axial des pattes 128 et des ressorts 122.On tire profit de ces bourrelets 600 pour découper dans la pièce d'appui 500 des extrémités des ressorts122 des pattes inclinées de maintien 501 prenant appui sur un bourrelet associé 600. La partie interne 120 comporte des trous 602 dans lesquels se montent des crans non référencés appartenant chacun à l'extrémité libre d'une boucle 502 prolongeant la branche inférieure de la pièce 500.Les crans précités pénètrent sans jeu circonférentiel dans leur trou associé 602 pour blocage en rotation de la pièce 500. La pièce 500 se monte ainsi par enfilage et encliquetage ou clipsage à l'intérieur de la portion 114; la patte 501 s'escamotant au passage du bourrelet 600 pour se déployer ensuite au contact du bourrelet 600, tandis que le cran pénètre dans son trou 602.Bien entendu comme visible à la figure 15 la partie externe 116 et la partie avant 118 peuvent être trouées respectivement en 603 et 604 pour réception respectivement d'un crans 503,ici en forme de dent de scie,et d'une patte inclinée 604 obtenue par découpe du fond de la pièce 500, la patte 501 étant remplacée par une patte transversale 505 pouvant être supprimée. Dans ces figures les branches de la pièce 500 s'étendent circonférentiellement.

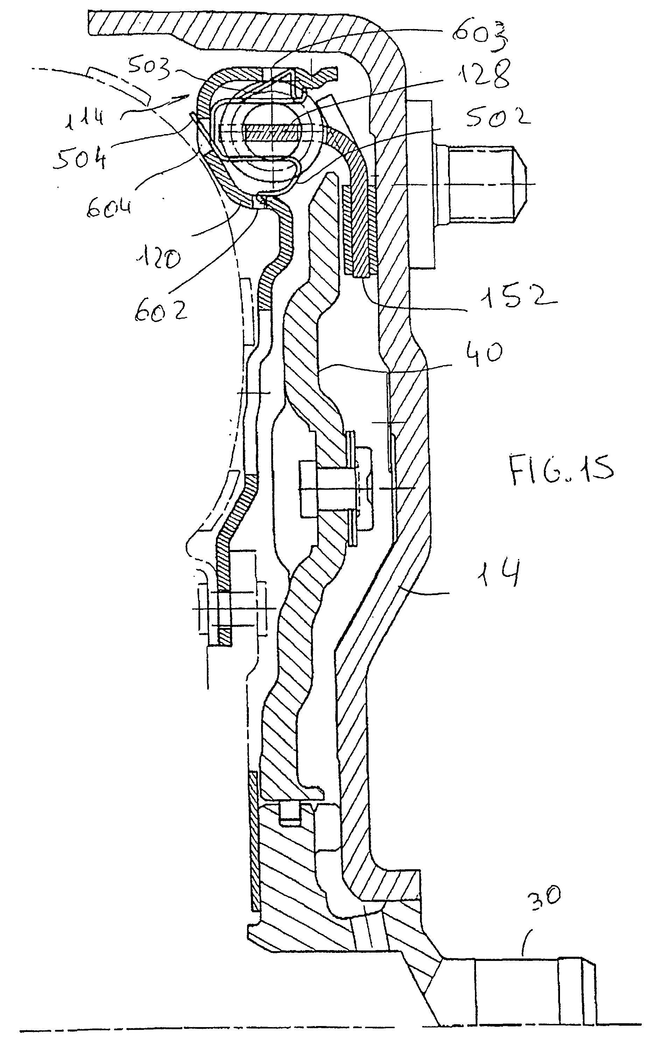

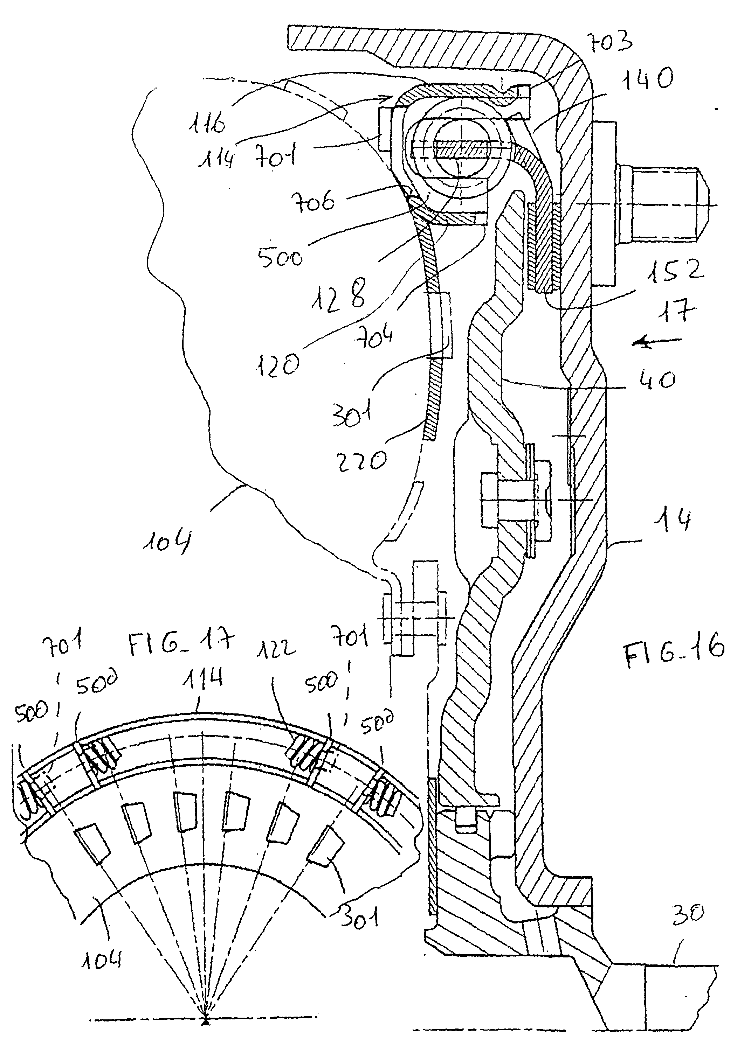

Dans la figure 16 les branches de la pièce 500 s'étendent transversalement en sorte qu'il faut deux pièces 500 entre deux ressorts consécutifs comme visible à la figure 17 comportant des pattes de fixation 220 comme à la figure 11, les pattes 301 rabattues circonférentiellement au contact de la roue 104 étant mieux visibles dans cette figure. On agrafe les pièces 500 sur la portion 114 à l'aide de pattes d'agrafage 701 issues du fond des pièces 500 et rabattues circonférentiellement au contact de la partie avant 118 et de crans 703, 704 issus des extrémités des branches de la pièce 500 en forme de U.

Les crans 703, 704 sont engagés chacun dans une encoche réalisée dans l'extrémité libre respectivement de la partie externe 116 et de la partie interne 120. Le fond de la pièce 500 est engagé dans une fenêtre 706 de la partie 118 pour dégager centralement le plus de place possible pour les pattes d'entraînement 128 sans augmenter l'encombrement axial.

Bien entendu on peut fixer par soudage la pièce 500 sur la portion 114 de préférence en plusieurs points.

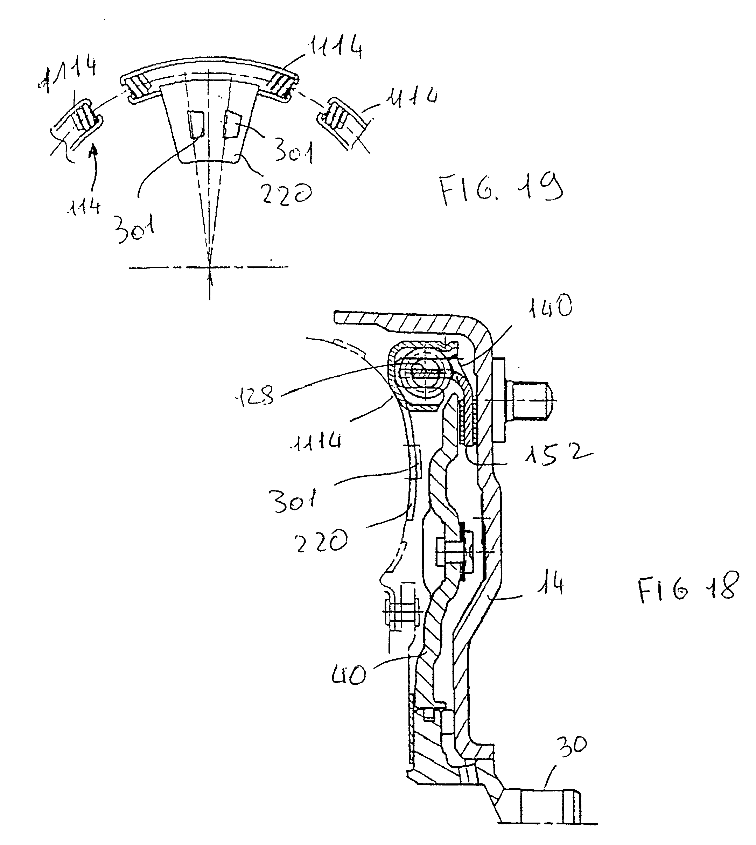

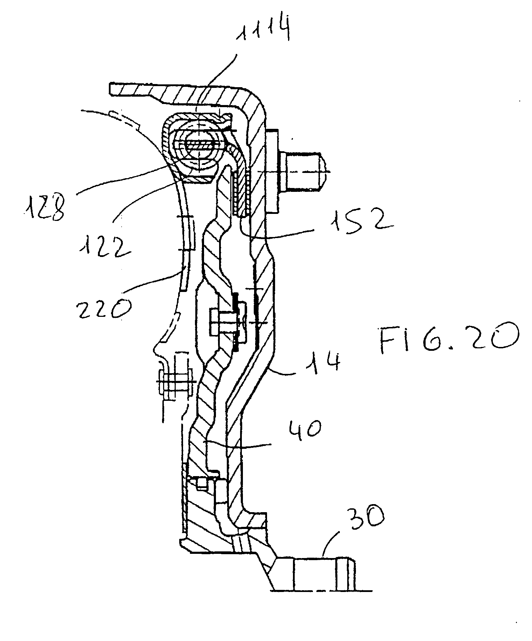

En variante dans les figures 18,19 la portion annulaire 114 est fractionnée en plusieurs parties 111 rapportées par agrafage à l'aide de pattes 220 comme dans les figures 16 et 11 Les parties 1114 ont en section une forme de U avec des extrémités rabattues transversalement pour constituer un appui pour les extrémités circonférentielles des ressorts 122. Les parties 1114 sont donc constituées par des pièces en forme de poches ouvertes axialement dans un sens. Bien entendu les pièces 1114 en variante sont fixées directement sur la roue 104 au niveau de leur partie avant par exemple par soudage comme visible à la figure 20.

La limitation du déplacement angulaire relatif du disque par rapport au voile 94 peut être réalisée par engagement d'une prolongation de certaines au moins des pattes 128 dans des fenêtres associées réalisées dans la partie avant 118 de la portion 114 comme visible en pointillés à la figure 1. Les prolongements pénètrent à jeux circonférentiels dans leur fenêtres associées pour coopérer, suivant le sens du déplacement relatif, avec l'un des bords latéraux de cette fenêtre en fin de déplacement. L'extrémité libre des prolongements est avantageusement chanfreinée, comme visible en 228 à la figure 1, pour éviter toute interférence avec la roue de turbine.

Dans les figures 11à 13 les pattes de retenu 140 des ressorts 122 limitent le déplacement précité par coopération après rattrapage d'un jeu circonférentiel avec un prolongement axial 826de l'appui126.

Le prolongement est décalé également vers l'intérieur pour interférer avec la patte 140 concernée en sorte que l'appui 126 est étagé en diamètre. A la figure 18, les pattes coopèrent après rattrapage d'un jeu avec des pièces 500 pour limiter les déplacements.

Bien entendu, les pattes d'entraînement 128 peuvent être légèrement inclinées en direction de la jupe 16; leur inclinaison étant plus faible que celles des pattes de retenue 140. Les pattes d'entraînement 128 sont dans tous les cas d'orientation axiale et sont destinées à être reliées de manière débrayable à la paroi transversale 14, ici par l'intermédiaire du disque de friction 152 qui peut être dépourvu de garniture de friction 160, 162. Ce disque 152 est destiné, dans les figures illustrées à venir en contact avec la portée 170 de la paroi 14 et ce en vis à vis de la périphérie externe du piston. En variante les pattes d'entraînement sont rapportées de manière individuelle ou issue piston 40. Dans tous les cas, les pattes sont portées par un élément annulaire d'orientation globalement radiale propre à venir en contact de manière débrayable avec la face interne 170 de la paroi radiale du carter 12.

## Revendications

1. Appareil (10) d'accouplement hydrocinétique, notamment pour véhicule automobile, du type comportant :
- un carter (12) doté d'une paroi (14), globalement d'orientation radiale, propre à être liée en rotation à un arbre menant ;
- une roue de turbine (104) solidaire en rotation d'un moyeu (54) propre à être lié en rotation à un arbre mené ;
- un embrayage de verrouillage, intervenant entre la roue de turbine (104) et la paroi radiale (14), qui comporte, agencés axialement d'avant en arrière entre la roue de turbine et la paroi radiale :
- une portion annulaire périphérique (114), d'orientation globalement axiale, solidaire en rotation de la roue de turbine (104), qui guide circonférentiellement et retient axialement vers l'avant des organes élastiques (122) à action circonférentielle, et qui comporte des zones (124, 126) d'appui pour les extrémités circonférentielles des organes élastiques (122), ladite portion (114) étant solidaire de la roue de turbine (104) en étant implantée à la périphérie externe de celle-ci et étant ouverte axialement vers l'arrière pour permettre l'introduction axiale, d'arrière en avant, des organes élastiques (122), entre les zones d'appui (124, 126);
- un piston (40), d'orientation globalement radiale, mobile axialement et lié en rotation au carter ;
- et un élément annulaire (152), d'orientation globalement radiale, d'une part, propre à venir en contact avec la face interne (170) de la paroi radiale (14) du carter (12) en vis à vis du piston et, d'autre part, qui comporte à sa périphérie extérieure des pattes d'entraînement (128) qui s'étendent globalement axialement vers l'arrière à l'intérieur de la portion annulaire périphérique (114) pour être reçues chacune entre les extrémités circonférentielles de deux organes élastiques consécutifs (122) à action circonférentielle, et qui est mobile axialement par rapport à la portion périphérique (114), **caractérisé en ce que** les organes élastiques (122) sont portés par l'élément annulaire (152) entre les pattes d'entraînement (128).

2. Appareil selon la revendication précédente, **caractérisé en ce que** la portion annulaire périphérique (114) du voile est conformée en une gorge axiale ouverte axialement vers l'arrière.

3. Appareil selon la revendication précédente, **caractérisé en ce que** ladite gorge (114) est délimitée radialement par une partie annulaire extérieure (116) et une partie annulaire intérieure (120,316), d'orientation globalement axiale, qui sont reliées par une partie avant (118) de forme concave, d'orientation globalement radiale, formant fond.

4. Appareil selon la revendication précédente, **caractérisé en ce que** les zones d'appui (124, 126) pour les extrémités circonférentielles des organes élastiques (122) sont formées dans lesdites parties annulaires extérieure (116) et intérieure (120) de la portion annulaire périphérique (114).

5. Appareil selon la revendication 3, **caractérisé en ce que** la partie annulaire intérieure (120,316) est inclinée en direction de l'axe de symétrie axiale (X-X-) que présente l'appareil.

6. Appareil selon l'une quelconque des revendications précédentes, **caractérisé en ce que** les pattes d'entraînement (128) d'orientation axiale sont reliées au bord périphérique extérieur (153) de l'élément annulaire (152) par des coudes de raccordement (130) sensiblement à angle droit.

7. Appareil selon la revendication 1, **caractérisé en ce que** chaque patte d'entraînement (128) comporte deux plots opposés (134) qui s'étendent circonférentiellement et dont chacun constitue un plot de centrage qui est reçu dans un logement complémentaire formé à l'extrémité circonférentielle (138) d'un organe élastique adjacent (122).

8. Appareil selon la revendication 7, **caractérisé en ce que** des coupelles d'appui (234) sont interposées entre les extrémités circonférentielles des organes élastiques (122) et les pattes d'entraînement, les plots (134) étant reçus dans des protubérances (235) que présentent les coupelles.

9. Appareil selon la revendication 3, **caractérisé en ce que** l'élément annulaire (152) comporte des pattes (140) de retenue, axialement vers l'arrière, des organes élastiques (122) qui s'étendent, globalement radialement vers l'extérieur à partir du bord périphérique extérieur (153) de l'élément annulaire, en regard des organes élastiques (122).

10. Appareil selon la revendication précédente, **caractérisé en ce que** les pattes de retenue (140) sont réparties angulairement de manière régulière entre les pattes d'entraînement (128).

11. Appareil selon la revendication 9, **caractérisé en ce que** l'extrémité libre (142) de chaque patte de retenue est reçue, avec jeu circonférentiel, à l'intérieur d'une encoche (144) formée dans le bord arrière (146) de la partie annulaire extérieure (116) de la portion annulaire périphérique (114) du voile (94), de manière à limiter le déplacement angulaire de l'élément annulaire (152) par rapport au voile.

12. Appareil selon la revendication 7, **caractérisé en ce que** chaque organe élastique (122) est un ressort à boudin à action circonférentielle.

13. Appareil selon la revendication précédente, **caractérisé en ce que** chaque plot de centrage (134) est reçu à l'intérieur de l'extrémité (138) d'un ressort adjacent.

14. Appareil selon la revendication 1, **caractérisé en ce que** la portion annulaire périphérique (114) est solidaire d'un voile (94) qui comporte une partie périphérique intérieure en forme d'anneau plat (106) dont le bord radial intérieur (92) est reçu axialement entre la roue de turbine (104) et un flasque (86), d'orientation radiale, du moyeu (54), et **en ce que** le voile (94) est fixé au flasque (86) du moyeu (54).

15. Appareil selon la revendication 1, **caractérisé en ce que** l'élément annulaire (152) consiste en un disque de friction propre à être serré entre la paroi radiale (14) et le piston (40).

## Patentansprüche

1. Hydrodynamischer Momentwandler (10), insbesondere für Kraftfahrzeuge, umfassend:
- ein Gehäuse (12) mit einer insgesamt radial ausgerichteten Wand (14), die drehfest mit einer treibenden Welle verbunden werden kann;
- ein Turbinenrad (104), das drehfest mit einer Nabe (54) verbunden ist, die drehfest mit einer getriebenen Welle verbunden werden kann;
- eine zwischen dem Turbinenrad (104) und der radialen Wand (14) wirksame Überbrückungskupplung, die, axial von vorn nach hinten zwischen dem Turbinenrad und der radialen Wand angeordnet, folgendes umfaßt:
- einen insgesamt axial ausgerichteten, drehfest mit dem Turbinenrad (104) verbundenen ringförmigen Umfangsabschnitt (114), der umfangsmäßig wirksame elastische Organe (122) umfangsmäßig führt und axial nach vorn hält und der Auflagebereiche (124, 126) für die Umfangsenden der elastischen Organe (122) umfaßt, wobei der besagte Abschnitt (114) fest mit dem Turbinenrad (104) verbunden und an dessen äußerem Umfang angeordnet und axial nach hinten offen ist, um die axiale Einführung der elastischen Organe (122) vom hinten nach vorn zwischen den Auflagebereichen (124, 126) zu ermöglichen;
- einen insgesamt radial ausgerichteten, axial beweglichen und drehfest mit dem Gehäuse verbundenen Kolben (40);
- und ein insgesamt radial ausgerichtetes ringförmiges Element (152), das einerseits mit der Innenfläche (170) der radialen Wand (14) des Gehäuses (12) gegenüber dem Kolben in Kontakt kommen kann und das andererseits an seinem äußeren Umfang Mitnahmeansätze (128) umfaßt, die sich insgesamt axial nach hinten im Innern des ringförmigen Umfangsabschnitts (114) erstrecken, um jeweils zwischen den Umfangsenden von zwei aufeinanderfolgenden umfangsmäßig wirksamen elastischen Organen (122) aufgenommen zu werden, und das im Verhältnis zum Umfangsabschnitt (114) axial beweglich ist, **dadurch gekennzeichnet, daß** die elastischen Organe (122) an dem ringförmigen Element (152) zwischen den Mitnahmeansätzen (128) angebracht sind.

2. Momentwandler nach dem vorangehenden Anspruch, **dadurch gekennzeichnet, daß** der ringförmige Umfangsabschnitt (114) der Zwischenscheibe in Form einer axial nach hinten offenen axialen Auskehlung gestaltet ist.

3. Momentwandler nach dem vorangehenden Anspruch, **dadurch gekennzeichnet, daß** die besagte Auskehlung (114) radial durch einen äußeren ringförmigen Teil (116) und einen inneren ringförmigen Teil (120, 316) mit axialer Gesamtausrichtung begrenzt wird, die durch einen insgesamt radial ausgerichteten vorderen Teil (118) mit konkaver Form verbunden sind, der einen Boden bildet.

4. Momentwandler nach dem vorangehenden Anspruch, **dadurch gekennzeichnet, daß** die Auflagebereiche (124, 126) für die Umfangsenden der elastischen Organe (122) in den besagten äußeren (116) und inneren (120) ringförmigen Teilen des ringförmigen Umfangsabschnitts (114) ausgebildet sind.

5. Momentwandler nach Anspruch 3, **dadurch gekennzeichnet, daß** der innere ringförmige Teil (120, 316) in Richtung der axialen Symmetrieachse (X-X), die der Momentwandler aufweist, geneigt ist.

6. Momentwandler nach einem der vorangehenden Ansprüche, **dadurch gekennzeichnet, daß** die axial ausgerichteten Mitnahmeansätze (128) mit dem äußeren Umfangsrand (153) des ringförmigen Elements (152) durch in etwa rechtwinklige Anschlußbiegungen (130) verbunden sind.

7. Momentwandler nach Anspruch 1, **dadurch gekennzeichnet, daß** jeder Mitnahmeansatz (128) zwei gegenüberliegende Sockel (134) umfaßt, die sich umfangsmäßig erstrecken und die jeweils einen Zentriersockel bilden, der in eine formschlüssige Aufnahme eingesetzt ist, die am Umfangsende (138) eines angrenzenden elastischen Organs (122) ausgebildet ist.

8. Momentwandler nach Anspruch 7, **dadurch gekennzeichnet, daß** Auflageteller (234) zwischen den Umfangsenden der elastischen Organe (122) und den Mitnahmeansätzen eingefügt sind, wobei die Sockel (134) in Ausstülpungen (235) eingesetzt sind, welche die Auflageteller aufweisen.

9. Momentwandler nach Anspruch 3, **dadurch gekennzeichnet, daß** das ringförmige Element (152) Halteansätze (140) umfaßt, um die elastischen Organe (122) axial nach hinten zu halten, die sich vom äußeren Umfangsrand (153) des ringförmigen Elements aus insgesamt radial nach außen, gegenüber den elastischen Organen (122) erstrecken.

10. Momentwandler nach dem vorangehenden Anspruch, **dadurch gekennzeichnet, daß** die Halteansätze (140) zwischen den Mitnahmeansätzen (128) winklig gleichmäßig verteilt sind.

11. Momentwandler nach Anspruch 9, **dadurch gekennzeichnet, daß** das freie Ende (142) jedes Halteansatzes mit Umfangsspiel im Innern einer Ausnehmung (144) eingesetzt ist, die im hinteren Rand (146) des äußeren ringförmigen Teils (116) des ringförmigen Umrangsabschnitts (114) der Zwischenscheibe (94) ausgebildet ist, um die winkelverschiebung des ringförmigen Elements (152) im Verhältnis zur Zwischenscheibe zu begrenzen.

12. Momentwandler nach Anspruch 7, **dadurch gekennzeichnet, daß** jedes elastische Organ (122) eine umfangsmäßig wirksame Schraubenfeder ist.

13. Momentwandler nach dem vorangehenden Anspruch, **dadurch gekennzeichnet, daß** jeder Zentriersockel (134) im Innern des Endes (138) einer angrenzenden Feder eingesetzt ist.

14. Momentwandler nach Anspruch 1, **dadurch gekennzeichnet, daß** der ringförmige Umfangsabschnitt (114) fest mit einer Zwischenscheibe (94) verbunden ist, die einen inneren Umfangsteil in Form eines flachen Rings (106) umfaßt, dessen innerer radialer Rand (92) axial zwischen dem Turbinenrad (104) und einem radial ausgerichteten Flansch (86) der Nabe (54) eingesetzt ist, und daß die Zwischenscheibe (94) am Flansch (86) der Nabe (54) befestigt ist.

15. Momentwandler nach Anspruch 1, **dadurch gekennzeichnet, daß** das ringförmige Element (152) aus einer Kupplungsscheibe besteht, die zwischen der radialen wand (14) und dem Kolben (40) eingespannt werden kann.

## Claims

1. Hydraulic coupling apparatus (10), especially for a motor vehicle, of the type comprising:
- a casing (12) having a generally radially orientated wall (14) adapted to be coupled in rotation to a driving shaft;
- a turbine wheel (104) which is fixed to a hub (54) for rotation therewith, and which is arranged to be coupled in rotation to a driven shaft;
- a lock-up clutch interposed operatively between the turbine wheel (104) and the radial wall (14), which includes, arranged axially between the turbine wheel and the radial wall, considered from front to rear;
- a generally axially orientated annular peripheral portion (114) fixed in rotation to the turbine wheel (104), which guides circumferentially and retains, axially towards the front, circumferentially acting resilient members (122), and which includes zones (124, 126) for engagement by the circumferential ends of the resilient members (122), the said portion (114) being fixed to the turbine wheel (104) and being fitted at the outer periphery of the latter, and being open axially towards the rear so as to enable the resilient members (122) to be introduced, axially forward from behind, between the engagement zones (124, 126);
- a generally radially orientated piston (40), which is movable axially and coupled to the casing for rotation therewith;
- and a generally radially orientated annular element (152) which, firstly, is adapted to come into contact with the inner face (170) of the radial wall (14) of the casing (12) in facing relationship with the piston, and which, secondly, includes at its outer periphery drive lugs (128) which extend generally axially towards the rear within the peripheral annular portion (114), so that each drive lug is received between the circumferential ends of two consecutive circumferentially acting resilient members (122), and which is movable axially with respect to the peripheral portion (114), **characterised in that** the resilient members (122) are carried by the annular member (152) between the drive lugs (128).

2. Apparatus according to the preceding Claim, **characterised in that** the peripheral annular portion (114) of the plate member is configured as an axial channel which is open axially towards the rear.

3. Apparatus according to the preceding Claim, **characterised in that** the said channel (114) is bounded radially by an outer annular portion (116) and an inner annular portion (120, 316), orientated generally axially, which are joined through a generally radially orientated concave front portion (118), constituting a base.

4. Apparatus according to the preceding Claim, **characterised in that** the engagement zones (124, 126) for the circumferential ends of the resilient members (122) are formed in the said outer annular portion (116) and inner annular portion (120) of the peripheral annular portion (114).

5. Apparatus according to Claim 3, **characterised in that** the inner annular portion (120, 316) is inclined towards the axial axis of symmetry (X-X) of the apparatus.

6. Apparatus according to any one of the preceding Claims, **characterised in that** the axially orientated drive lugs (128) are joined to the outer peripheral edge (153) of the annular element (152) by substantially right-angled junction bends (130).

7. Apparatus according to Claim 1, **characterised in that** each drive lug (128) includes two opposed pads (134) which extend circumferentially, and each of which constitutes a centring pad which is received in a complementary housing formed at the circumferential end (138) of an adjacent resilient member (122).

8. Apparatus according to Claim 7, **characterised in that** thrust cups (234) are interposed between the circumferential ends of the resilient members (122) and the drive lugs, the pads (134) being received in projecting elements (235) of the cups.

9. Apparatus according to Claim 3, **characterised in that** the annular element (152) includes retaining lugs (140) for retaining, axially towards the rear, resilient members (122) which extend generally radially outwards from the outer peripheral edge (153) of the annular element facing the resilient members (122).

10. Apparatus according to the preceding Claim, **characterised in that** the retaining lugs (140) are spaced apart circumferentially at regular intervals between the drive lugs (128).

11. Apparatus according to Claim 9, **characterised in that** the free end (142) of each retaining lug is received, with a circumferential clearance, within a notch (144) which is formed in the rear edge (146) of the outer annular portion (116) of the peripheral annular portion (114) of the plate member (94), so as to limit the angular displacement of the annular element (152) with respect to the plate member.

12. Apparatus according to Claim 7, **characterised in that** each resilient member (122) is a circumferentially acting coil spring.

13. Apparatus according to the preceding Claim, **characterised in that** each centring pad (134) is received within the end (138) of an adjacent spring.

14. Apparatus according to Claim 1, **characterised in that** the peripheral annular portion (114) is fixed to a radial plate member (94) which includes an inner peripheral portion in the form of a flat annular ring (106), the inner radial edge (92) of which is received axially between the turbine wheel (104) and a radially orientated plate portion (86) of the hub (54), and **in that** the plate member (94) is fixed to the plate portion (86) of the hub (54).

15. Apparatus according to Claim 1, **characterised in that** the annular element (152) consists of a friction disc which is adapted to be gripped between the radial wall (14) and the piston (40).
